# EUROPEAN PATENT SPECIFICATION

(11) **EP 4 520 997 B1**
(45) Date of publication and mention of the grant of the patent: **17.06.2026**
(21) Application number: 24198349.3
(22) Date of filing: 04.09.2024
(51) Int. Cl.: F16F 9/32, F16F 9/53

(54) **LASER HARDENING LOW-CARBON STEEL DAMPER TUBES**
LASERHÄRTENDE KOHLENSTOFFARME STAHLDÄMPFERROHRE
TUBES AMORTISSEURS EN ACIER À FAIBLE TENEUR EN CARBONE ET DURCISSANT AU LASER

(30) Priority: 05.09.2023 US 202318461365; 01.08.2024 CN 202411054648
(43) Date of publication of application: 12.03.2025
(73) Proprietor: BeijingWest Industries Co. Ltd., 102400 Beijing (CN)
(72) Inventor: PIRRELLO, Frank Gerard, 389 Grassy Creek Way, Dayton, OH 45458 (US); LOPEZ, JR, James Louis, 9500 Moorgate Court, Dayton, OH 45458 (US); CHISOM, Michael James, 464 Evergreen Dr., Springboro, OH 45066 (US); TANNAHILL, Tania, 6532 Foursome Lane, Englewood, OH 45322 (US); PYLE, Steven Edward, 1111 Bull Rd., New Lebanon, OH 45345 (US)
(74) Representative: Lukaszyk, Szymon

(56) References cited:
- WO-A1-2015/151661
- IT-A1- 201800 003 310
- US-A1- 2018 298 975

## Description

### Field of the Invention

The present invention generally relates to a damper assembly for a vehicle.

### Related Art

Damper assemblies are well known in the art for use in a vehicle. US2001025753 discloses a damper assembly comprising a damper tube in which a piston rod is mounted in an axially adjustable fashion. A piston is connected to an end of the piston rod within the damper tube and separates a compression chamber from a rebound chamber.

Document WO 2015/151661 A1 discloses a relevant damper assembly according to the features of the pre-amble of claim 1.

Damper tubes for damper assemblies, such as magnetorheological (MR) fluid damper may be made of mild steel. Such damper tubes include an inner surface that must be resilient to provide sealing contact with the piston and to prevent excess wear that can accumulate over a lifetime of service use. The inner surface of damper tubes may be chrome plated to provide the wear resistance required for service in a damper assembly for a vehicle suspension.

However, chrome plating is a relatively expensive process and includes the use of chemicals that can present environmental challenges if not properly handled and disposed. Chrome plating of damper tubes includes several steps including degreasing, and submersion in a chrome plating bath. An electrical current may be applied to create a desired chrome thickness. If the tubes are not properly degreased, the chrome coating can develop poor adhesion or pits which with affect performance. If the chrome plating bath is not properly maintained or the electrical current is not evenly distributed, there can be inconsistency in the coating thickness. Handling and disposal of the acidic chrome plating bath can present significant environmental challenges.

It is an object of the present disclosure to provide a hydraulic damper with a hardened inner surface, and which does not involve chrome plating the inner surface.

### Summary of the invention

The present invention provides a damper assembly. The damper assembly includes a damper tube having a tubular shape defining an inner surface and extending for an axial length. The damper assembly also includes a rod disposed at least partially within the damper tube; and a piston connected to the rod and slidably disposed within the damper tube and configured to contact the inner surface of the damper tube along a stroke region less than the axial length. The inner surface of the damper tube includes a hardened surface including martensite and extending along the stroke region and less than the axial length of the damper tube.

The present disclosure also provides a method of treating a damper tube. The method includes: generating a laser beam; directing the laser beam onto an inner surface of the damper tube to heat the inner surface to an elevated temperature sufficient to cause steel of the inner surface of the damper tube to form austenite; and cooling the austenite to form a hardened surface including martensite. Directing the laser beam onto the inner surface of the damper tube includes directing the laser beam along a stroke region and less than an axial length of the damper tube.

### Brief description of the drawings

Other advantages of the present invention will be readily appreciated, as the same becomes better understood by reference to the following detailed description when considered in connection with the accompanying drawings.
FIG. 1 shows a cross-section of a damper assembly;
FIG. 2 shows a perspective cut-away view of a damper tube, in accordance with an aspect of the present disclosure;
FIG. 3 shows a cut-away side view of the damper tube of FIG. 2;
FIG. 4 shows a cross-sectional fragmentary view of the inner surface of the damper tube of FIG. 2;
FIG. 5 shows a schematic diagram of a system for laser hardening an inner surface of a damper tube, in accordance with an aspect of the present disclosure; and
FIG. 6 shows a flow chart listing steps in a method for laser hardening an inner surface of a damper tube, in accordance with an aspect of the present disclosure.

### Description of the enabling embodiments

Referring to the Figures, wherein like numerals indicate corresponding parts throughout the several views, it is one aspect of the present invention to provide a damper tube with an inner surface that is hardened to provide wear resistance for use in a magnetorheological (MR) damper, and without chrome plating.

The device and method of the present disclosure includes using a laser hardening process on the inner surface of a low-carbon steel tube for use as a damper tube in a damper assembly, such as an MR damper that contains an MR fluid. MR fluid may contain components that are abrasive and which can cause wear on an inner surface of the damper tube, especially along a stroke region where a piston contacts the inner surface tube.

A laser beam is directed onto the low-carbon tube and heats the tube in a localized area. This elevated temperature makes the carbon atoms in the steel rearrange to an austenite form on the surface of the steel. When the laser energy is removed, the tube will then self-quench and form a desired martensite form with hardness sufficient to provide resistance against wear that may otherwise be caused by sliding friction from contact with a piston. This martensite microstructure will increase the microhardness of the surface. The device and method of the present disclosure provides damper tubes with an inner surface that is hardened in a specific pattern that would allow for optimal wear resistance, and without plating the surface with a metal coating.

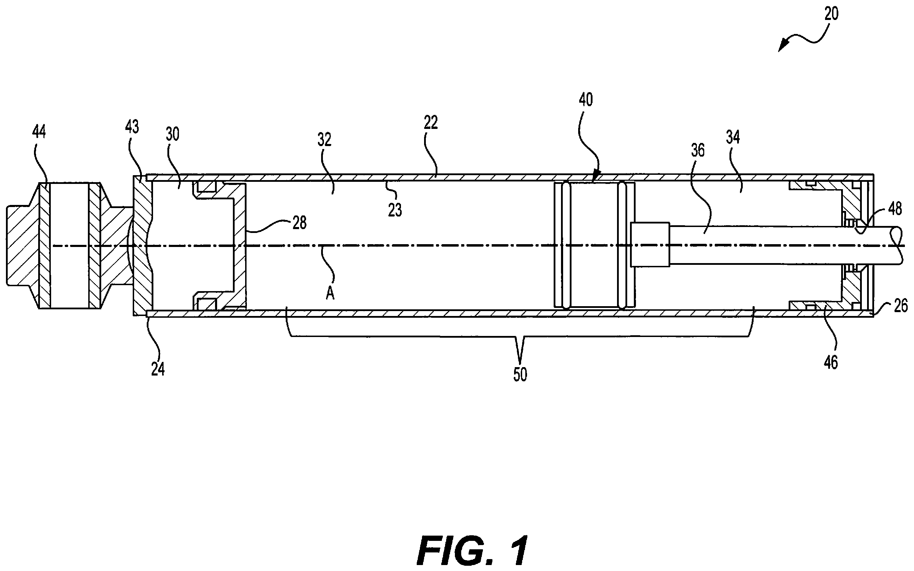

FIG. 1 shows a cross-section of a damper assembly 20 including a damper tube 22 that defines an inner surface 23. The damper tube 22 has a tubular shape and extends about an axis A and for an axial length between a first end 24 and a second end 26. The damper tube 22 may be made of a low-carbon steel. In some embodiments, the damper tube 22 may have a carbon content of between about 0.05% to about 0.3% by weight. In some embodiments, the damper tube 22 may have a carbon content of between about 0.3% to about 0.5% by weight.

The damper assembly 20 also includes a rod 36 that is disposed at least partially within the damper tube 22, and a piston 40 that is connected to the rod 36 and slidably disposed within the damper tube 22. The damper tube 22 defines a fluid chamber 32, 34 that contains a liquid, such as oil. The piston 40 divides the fluid chamber 32, 34 into a compression chamber 32 and a rebound chamber 34. In some embodiments, the piston 40 regulates fluid flow between the compression chamber 32 and the rebound chamber 34 to generate damping force in either or both of a rebound stroke and/or a compression stroke. In some embodiments, the fluid chamber 32, 34 is filled with an MR fluid having a viscosity that can be varied by application of a magnetic field. However, the fluid chamber 32, 34 may alternatively be filled with a non-MR fluid, such as oil without MR components.

The piston 40 is configured to contact and to seal against the inner surface 23 of the damper tube 22 along a stroke region 50 that is less than the axial length of the damper tube 22. For example, and as shown in FIG. 1, the stroke region 50 may be spaced apart from each of the first end 24 and the second end 26 of the damper tube 22.

The damper assembly 20 also includes a gas cup 28 that separates the compression chamber 32 from a gas compartment 30 containing a gas. The damper assembly 20 also includes a first closure 43 is located at the first end 24 of the damper tube 22. The first closure 43 encloses the gas compartment 30. A damper mount 44 is attached to the first closure 43 for securement to a vehicle component, such as suspension component or a fixed chassis structure. The damper assembly 20 also includes a second closure 46 disposed adjacent to the second end 26 of the damper tube 22 to enclose the rebound chamber 34. The second closure 46 defines a bore 48 for the rod 36 to pass through. The second closure 46 may provide a fluid-tight seal with the rod 36 to prevent fluid from leaking out of the rebound chamber 34.

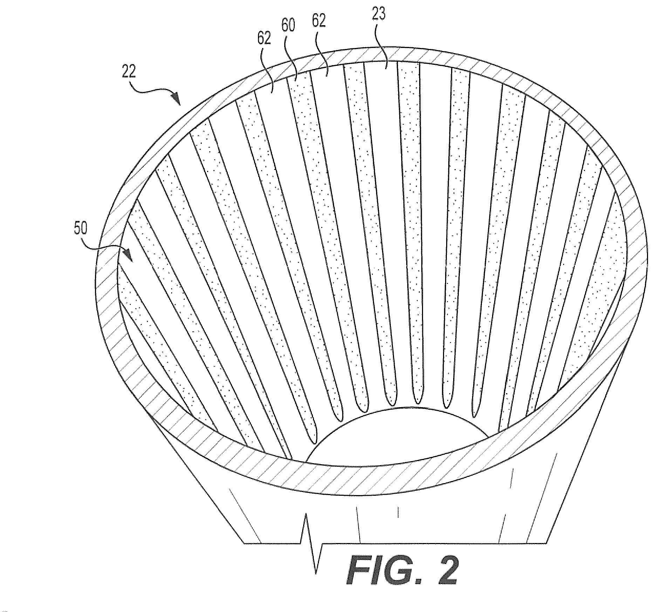

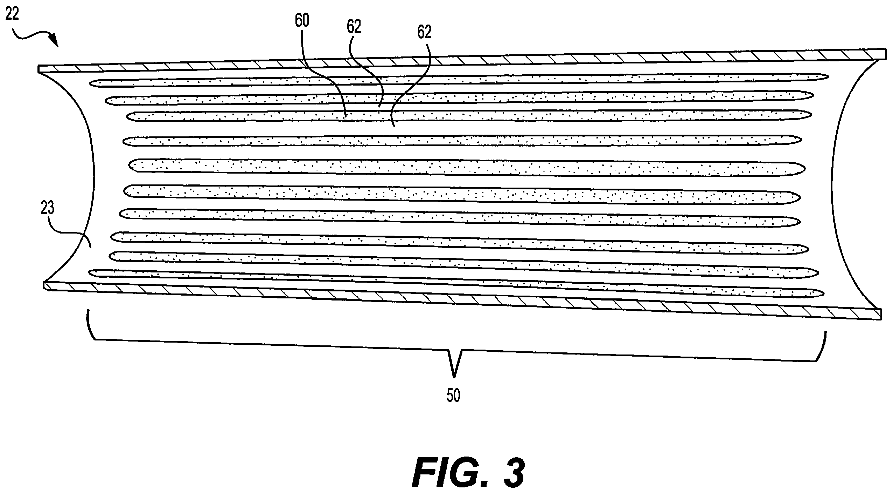

FIGS. 2-3 each show views of the inner surface 23 damper tube 22, and showing a plurality of bands 60 each defining a hardened surface that extends along the stroke region 50 of the inner surface 23 of the damper tube 22. The bands 60 extend parallel to and spaced apart from one another, with regions of non-hardened material between adjacent ones of the bands 60. However, the bands 60 may have another arrangement, such as an intersecting pattern or a continuous fill. As shown, the bands 60 each extend in an axial direction. Additionally or alternatively, one or more of the bands 60 may extend annularly around the inner surface 23 damper tube 22 and/or in a helical or spiral pattern. In some embodiments, the bands 60 may intersect one-another. For example, the inner surface 23 of the damper tube 22 may include two or more sets of the bands 60 intersecting one-another to define a crosshatch pattern. The bands 60 may include martensite, which is a relatively hard form of steel, and which resists wear due to sliding contact with the piston 40. The bands 60 may have a hardness rating that is sufficient to provide the desired wear resistance to maintain the inner surface 23 in an operable condition over a service life of the damper assembly 20. The bands 60 may have a Rockwell Hardness of at least about RC 49. For example, the bands 60 may have a Rockwell Hardness of between RC 48 and RC 50. The bands 60 may be formed by laser heating an austenite steel then quickly self-quenching to form the martensite. In other words, removal of the laser heating may cause a local region of the damper tube 22 to cool relatively quickly and to form the martensite. Alternatively or additionally, a supplemental coolant may be used, such as a liquid or a gaseous coolant that may remove heat from the bands 60 after the laser heating.

FIGS. 2-3 each show the bands 60 being disposed at regular angular intervals extending circumferentially around the inner surface 23 damper tube 22 and separated by second bands 62 of non-hardened material, such as low-carbon steel that was not subjected to a heat treatment.

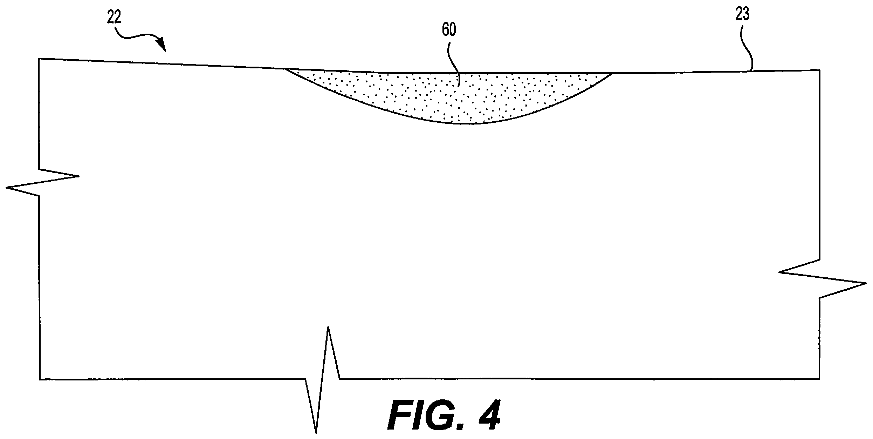

FIG. 4 shows a cross-sectional fragmentary view of the inner surface 23 of the damper tube 22, showing the axial band 60 of the hardened material that extends into the damper tube 22 and beneath the inner surface 23.

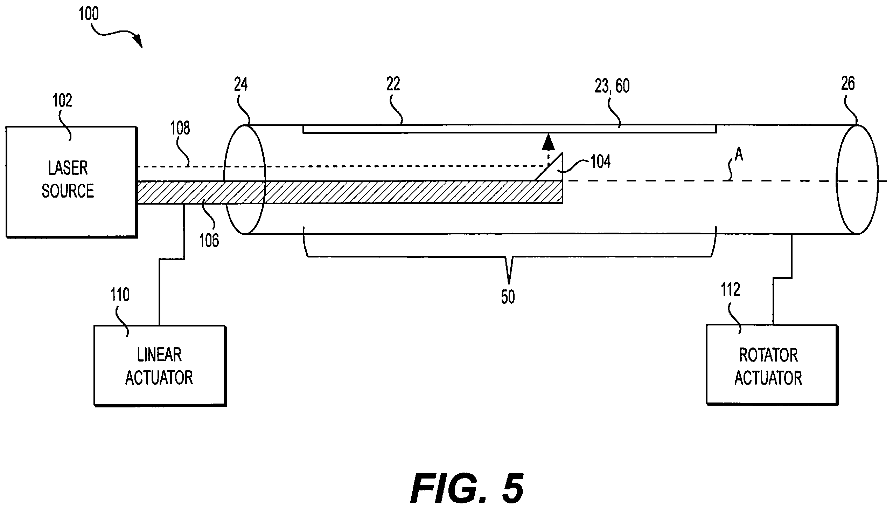

FIG. 5 shows a schematic diagram of a system 100 for laser hardening an inner surface 23 of a damper tube 22. The system 100 includes a laser source 102, such as a carbon dioxide laser, configured to generate a laser beam 108. The system 100 also includes a reflector 104, such as a mirror or a prism, that is attached to a beam 106 and configured to be placed within the damper tube 22 and to direct the laser beam 108 onto the inner surface 23 of the damper tube 22.

In some embodiments, and as shown in FIG. 5, the system 100 includes a linear actuator 110 configured to move the beam 106 and the reflector 104 in an axial direction to cause the laser beam 108 to be directed along the stroke region 50 and to form each of the plurality of bands 60 extending along an axial length of the damper tube. For example, the bands 60 may be formed in an axial path, as shown in FIG. 2 or in a helical path. Alternatively or additionally, the damper tube 22 can be moved in an axial direction to cause the laser beam 108 to form each of the plurality of bands 60 along the stroke region 50.

In some embodiments, and as shown in FIG. 5, the system 100 includes a rotator actuator 112 configured to rotate the damper tube 22 by a fixed angle to form each of the plurality of bands 60. Alternatively or additionally, the reflector 104 can be rotated about the axis A to form each of the plurality of bands 60 along the stroke region 50.

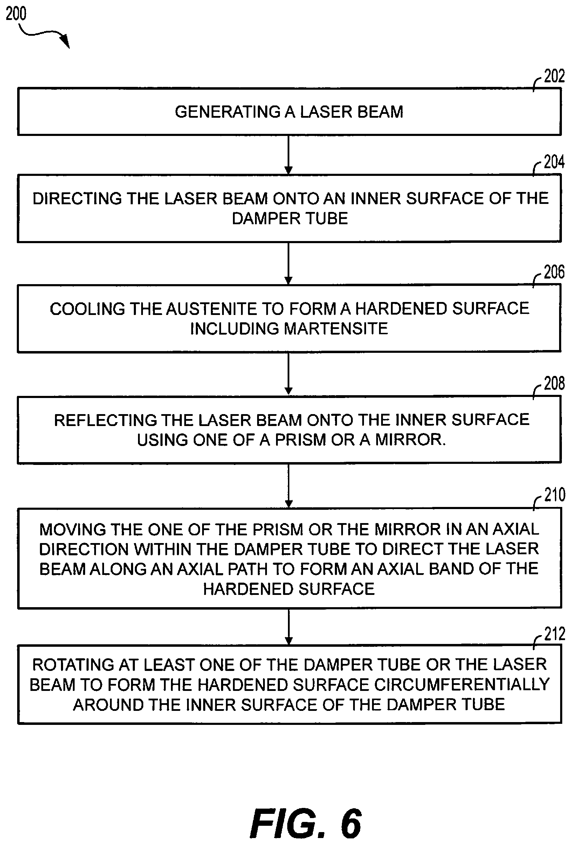

A method 200 for laser hardening a damper tube is shown in the flow chart of FIG. 6. As can be appreciated in light of the disclosure, the order of operation within the method is not limited to the sequential execution as illustrated in FIG. 6, but may be performed in one or more varying orders as applicable and in accordance with the present disclosure.

The method 200 includes generating a laser beam at step 202. For example, the laser source 102 may generate a laser beam with sufficient power to heat a low-carbon steel to form a hardened surface including martensite, and over a time scale that is efficient for production.

The method 200 also includes directing the laser beam onto an inner surface of the damper tube at step 204. Step 204 may include the laser beam heating the inner surface to an elevated temperature sufficient to cause steel of the inner surface of the damper tube to form austenite. For example, directing the laser beam onto the inner surface of the damper tube may include reflecting the laser beam onto the inner surface using one of a prism or a mirror. Directing the laser beam onto the inner surface of the damper tube may include directing the laser beam along a stroke region and less than an axial length of the damper tube.

The method 200 also includes cooling the austenite at step 206 to form a hardened surface including martensite. For example, the austenite may be self-quenched by heat being conducted through the damper tube 22 and away from the heated region. Alternatively or additionally, a supplemental coolant may be used, such as a liquid or a gaseous coolant that may be directed onto a heated portion of the damper tube 22 to remove heat from the bands 60 after the laser heating.

In some embodiments, the method 200 also includes reflecting, at step 208, the laser beam onto the inner surface using one of a prism or a mirror.

In some embodiments, the method 200 also includes moving, at step 210, the one of the prism or the mirror in an axial direction within the damper tube to direct the laser beam along an axial path to form a band of the hardened surface.

In some embodiments, the method 200 also includes rotating, at step 212, at least one of the damper tube or the laser beam to form the hardened surface circumferentially around the inner surface of the damper tube. For example, a rotator actuator 112 may rotate at least one of the damper tube or the laser beam to produce a plurality of the bands 60 spaced apart at regular angular intervals around the inner surface of the damper tube 22.

Obviously, many modifications and variations of the present invention are possible in light of the above teachings and may be practiced otherwise than as specifically described while within the scope of the appended claims. These antecedent recitations should be interpreted to cover any combination in which the inventive novelty exercises its utility.

## Claims

1. A damper assembly (20) comprising:
a damper tube (22) having a tubular shape defining an inner surface (23) and extending for an axial length;
a rod (36) disposed at least partially within the damper tube (22); and
a piston (40) connected to the rod (36) and slidably disposed within the damper tube (22) and configured to contact the inner surface (23) of the damper tube (22) along a stroke region less than the axial length;
**characterised in that**
the inner surface (23) of the damper tube (22) includes a hardened surface including martensite and extending along the stroke region and less than the axial length of the damper tube.

2. The damper assembly of claim 1, wherein the damper tube (22) is made of low-carbon steel.

3. The damper assembly of claim 1 or 2, wherein the hardened surface has a Rockwell Hardness of at least about RC 49.

4. The damper assembly of any one of claims 1 to 3, wherein the hardened surface extends circumferentially around the inner surface (23) of the damper tube (22).

5. The damper assembly of any one of claims 1 to 4, wherein the hardened surface includes a plurality of bands (60) that each extend along the stroke region of the inner surface (23) of the damper tube (22).

6. The damper assembly of claim 5, wherein the plurality of bands (60) are spaced apart at regular angular intervals around the inner surface (23) of the damper tube (22); and/or
wherein the plurality of bands (60) each extend in an axial direction.

7. A method for laser hardening a damper tube (22), the method comprising:
generating (202) a laser beam;
directing (204) the laser beam onto an inner surface (23) of the damper tube (22) to heat the inner surface (23) to an elevated temperature sufficient to cause steel of the inner surface (23) of the damper tube (22) to form austenite; and
cooling (206) the austenite to form a hardened surface including martensite, and
wherein directing (204) the laser beam onto the inner surface (23) of the damper tube (22) includes directing the laser beam along a stroke region and less than an axial length of the damper tube (22).

8. The method of claim 7, wherein directing (204) the laser beam onto the inner surface (23) of the damper tube (22) includes reflecting the laser beam onto the inner surface (23) using one of a prism or a mirror,
in particular wherein the method further includes moving (210) the one of the prism or the mirror in an axial direction within the damper tube (22) to direct the laser beam to form a band (60) of the hardened surface extending along an axial length of the damper tube (22).

9. The method of claim 7, wherein the method further includes rotating (212) at least one of the damper tube (22) or the laser beam to form the hardened surface circumferentially around the inner surface (23) of the damper tube (22).

10. The method of claim 9, wherein rotating (212) at least one of the damper tube (22) or the laser beam includes rotating, by a rotator actuator (112), the damper tube (22); or
wherein directing (204) the laser beam onto the inner surface (23) of the damper tube (22) includes reflecting the laser beam onto the inner surface (23) using one of a prism or a mirror, and wherein rotating the damper tube (22) or the laser beam includes rotating the one of the prism or the mirror.

11. The method of claim 7, wherein the hardened surface extends circumferentially around the inner surface of the damper tube.

12. The method of claim 7, wherein directing (204) the laser beam onto the inner surface (23) of the damper tube (22) includes directing the laser beam to form the hardened surface as a plurality of bands (60) that each extend along the stroke region of the inner surface (23) of the damper tube (22).

13. The method of claim 12, wherein the plurality of bands (60) are spaced apart at regular angular intervals around the inner surface (23) of the damper tube (22); and/or
wherein the plurality of bands (60) each extend in an axial direction.

14. The method of any one of claims 7 to 13, wherein the damper tube (22) is made of low-carbon steel; and/or wherein the hardened surface has a Rockwell Hardness of at least about RC 49.

15. The method of any one of claims 7 to 14, wherein the cooling the austenite to form the hardened surface includes self quenching.

## Patentansprüche

1. Eine Dämpferbaugruppe (20), bestehend aus:
einem Dämpferrohr (22) mit einer rohrförmigen Gestalt, das eine Innenfläche (23) definiert und sich über eine axiale Länge erstreckt;
einer Stange (36), die zumindest teilweise innerhalb des Dämpferrohrs (22) angeordnet ist; und
einem Kolben (40), der mit der Stange (36) verbunden ist und verschiebbar innerhalb des Dämpferrohrs (22) angeordnet ist und so konfiguriert ist, dass er die Innenfläche (23) des Dämpferrohrs (22) entlang eines Hubbereichs berührt, der kleiner ist als die axiale Länge;
**dadurch gekennzeichnet, dass** die Innenfläche (23) des Dämpferrohrs (22) eine gehärtete Oberfläche aufweist, die Martensit enthält und sich entlang des Hubbereichs und weniger als über die axiale Länge des Dämpferrohrs erstreckt.

2. Die Dämpferbaugruppe nach Anspruch 1, wobei das Dämpferrohr (22) aus kohlenstoffarmem Stahl hergestellt ist.

3. Die Dämpferbaugruppe nach Anspruch 1 oder 2, wobei die gehärtete Oberfläche ein Rockwell-Härtegrad von mindestens etwa RC 49 aufweist.

4. Die Dämpferbaugruppe nach einem der Ansprüche 1 bis 3, wobei sich die gehärtete Oberfläche in Umfangsrichtung um die Innenfläche (23) des Dämpferrohrs (22) erstreckt.

5. Die Dämpferbaugruppe nach einem der Ansprüche 1 bis 4, wobei die gehärtete Oberfläche eine Vielzahl von Bändern (60) umfasst, die sich jeweils entlang des Hubbereichs der Innenfläche (23) des Dämpferrohrs (22) erstrecken.

6. Die Dämpferbaugruppe nach Anspruch 5, wobei die mehreren Bänder (60) in regelmäßigen Winkelabständen um die Innenfläche (23) des Dämpferrohrs (22) beabstandet sind; und/oder
wobei sich die mehreren Bänder (60) jeweils in axialer Richtung erstrecken.

7. Ein Verfahren zum Laserhärten eines Dämpferrohrs (22), wobei das Verfahren umfasst:
Erzeugen (202) eines Laserstrahls;
Richten (204) des Laserstrahls auf eine Innenfläche (23) des Dämpferrohrs (22), um die Innenfläche (23) auf eine erhöhte Temperatur zu erhitzen, die ausreicht, um Stahl der Innenfläche (23) des Dämpferrohrs (22) zur Bildung von Austenit zu veranlassen; und
Abkühlen (206) des Austenits, um eine gehärtete Oberfläche einschließlich Martensit zu bilden, und
wobei das Richten (204) des Laserstrahls auf die Innenfläche (23) des Dämpferrohrs (22) das Richten des Laserstrahls entlang eines Hubbereichs und über weniger als eine axiale Länge des Dämpferrohrs (22) umfasst.

8. Das Verfahren nach Anspruch 7, wobei das Richten (204) des Laserstrahls auf die Innenfläche (23) des Dämpferrohrs (22) das Reflektieren des Laserstrahls auf die Innenfläche (23) unter Verwendung eines Prismas oder eines Spiegels umfasst, insbesondere wobei das Verfahren ferner das Bewegen (210) des Prismas oder des Spiegels in axialer Richtung innerhalb des Dämpferrohrs (22) umfasst, um den Laserstrahl so zu lenken, dass er ein Band (60) der gehärteten Oberfläche bildet, das sich entlang einer axialen Länge des Dämpferrohrs (22) erstreckt.

9. Das Verfahren nach Anspruch 7, wobei das Verfahren ferner das Drehen (212) mindestens eines der Elemente Dämpferrohr (22) oder Laserstrahl umfasst, um die gehärtete Oberfläche umfänglich um die Innenfläche (23) des Dämpferrohrs (22) herum zu bilden.

10. Das Verfahren nach Anspruch 9, wobei das Drehen (212) mindestens eines der Elemente Dämpferrohr (22) oder Laserstrahl das Drehen des Dämpferrohrs (22) durch einen Rotationsaktuator (112) umfasst; oder
wobei das Richten (204) des Laserstrahls auf die Innenfläche (23) des Dämpferrohrs (22) das Reflektieren des Laserstrahls auf die Innenfläche (23) unter Verwendung eines Prismas oder eines Spiegels umfasst, und wobei das Drehen des Dämpferrohrs (22) oder des Laserstrahls das Drehen des Prismas oder des Spiegels umfasst.

11. Das Verfahren nach Anspruch 7, wobei sich die gehärtete Oberfläche umfänglich um die Innenfläche des Dämpferrohrs erstreckt.

12. Das Verfahren nach Anspruch 7, wobei das Richten (204) des Laserstrahls auf die Innenfläche (23) des Dämpferrohrs (22) das Richten des Laserstrahls umfasst, um die gehärtete Oberfläche als eine Vielzahl von Bändern (60) zu bilden, die sich jeweils entlang des Hubbereichs der Innenfläche (23) des Dämpferrohrs (22) erstrecken.

13. Das Verfahren nach Anspruch 12, wobei die mehreren Bänder (60) in regelmäßigen Winkelabständen um die Innenfläche (23) des Dämpferrohrs (22) voneinander beabstandet sind; und/oder
wobei sich die mehreren Bänder (60) jeweils in axialer Richtung erstrecken.

14. Das Verfahren nach einem der Ansprüche 7 bis 13, wobei das Dämpferrohr (22) aus kohlenstoffarmem Stahl hergestellt ist; und/oder wobei die gehärtete Oberfläche ein Rockwell-Härtegrad von mindestens etwa RC 49 aufweist.

15. Das Verfahren nach einem der Ansprüche 7 bis 14, wobei das Abkühlen des Austenits zur Bildung der gehärteten Oberfläche ein Selbstabschrecken umfasst.

## Revendications

1. Un ensemble amortisseur (20) comprenant:
un tube d'amortisseur (22) de forme tubulaire définissant une surface interne (23) et s'étendant sur une longueur axiale;
une tige (36) disposée au moins partiellement à l'intérieur du tube d'amortisseur (22) ; et
un piston (40) relié à la tige (36) et disposé de manière coulissante à l'intérieur du tube d'amortisseur (22) et configuré pour venir en contact avec la surface interne (23) du tube d'amortisseur (22) le long d'une région de course inférieure à ladite longueur axiale;
**caractérisé en ce que** la surface interne (23) du tube d'amortisseur (22) comprend une surface durcie comprenant de la martensite et s'étendant le long de ladite région de course et sur une longueur inférieure à la longueur axiale du tube d'amortisseur.

2. L'ensemble amortisseur selon la revendication 1, dans lequel le tube d'amortisseur (22) est constitué d'un acier doux.

3. L'ensemble amortisseur selon la revendication 1 ou 2, dans lequel ladite surface durcie présente une dureté Rockwell d'au moins environ RC 49.

4. L'ensemble amortisseur selon l'une quelconque des revendications 1 à 3, dans lequel ladite surface durcie s'étend de manière circonférentielle autour de la surface interne (23) du tube d'amortisseur (22).

5. L'ensemble amortisseur selon l'une quelconque des revendications 1 à 4, dans lequel ladite surface durcie comprend une pluralité de bandes (60) qui s'étendent chacune le long de ladite région de course de la surface interne (23) du tube d'amortisseur (22).

6. L'ensemble amortisseur selon la revendication 5, dans lequel ladite pluralité de bandes (60) est espacée l'une de l'autre à des intervalles angulaires réguliers autour de la surface interne (23) du tube d'amortisseur (22) et/ou
dans lequel ladite pluralité de bandes (60) s'étend chacune dans une direction axiale.

7. Un procédé de durcissement au laser d'un tube d'amortisseur (22), le procédé comprenant:
la génération (202) d'un faisceau laser;
le guidage (204) du faisceau laser sur une surface interne (23) du tube d'amortisseur (22) afin de chauffer ladite surface interne (23) à une température élevée suffisante pour amener l'acier de la surface interne (23) du tube d'amortisseur (22) à former de l'austénite; et
le refroidissement (206) de ladite austénite afin de former une surface durcie comprenant de la martensite, et
dans lequel le guidage (204) du faisceau laser sur la surface interne (23) du tube d'amortisseur (22) comprend le guidage du faisceau laser le long d'une région de course et sur une longueur inférieure à une longueur axiale du tube d'amortisseur (22).

8. Le procédé selon la revendication 7, dans lequel le guidage (204) du faisceau laser sur la surface interne (23) du tube d'amortisseur (22) comprend la réflexion du faisceau laser sur la surface interne (23) à l'aide d'un prisme ou d'un miroir,
en particulier dans lequel le procédé comprend en outre le déplacement (210) dudit prisme ou dudit miroir dans une direction axiale à l'intérieur du tube d'amortisseur (22) afin de guider le faisceau laser pour former une bande (60) de ladite surface durcie s'étendant le long d'une longueur axiale du tube d'amortisseur (22).

9. Le procédé selon la revendication 7, dans lequel le procédé comprend en outre la rotation (212) d'au moins l'un du tube d'amortisseur (22) ou du faisceau laser pour former ladite surface durcie de manière circonférentielle autour de la surface interne (23) du tube d'amortisseur (22).

10. Le procédé selon la revendication 9, dans lequel la rotation (212) d'au moins l'un du tube d'amortisseur (22) ou du faisceau laser comprend la rotation, au moyen d'un actionneur de rotation (112), du tube d'amortisseur (22); ou
dans lequel le guidage (204) du faisceau laser sur la surface interne (23) du tube d'amortisseur (22) comprend la réflexion du faisceau laser sur la surface interne (23) au moyen d'un prisme ou d'un miroir, et dans lequel la rotation du tube d'amortisseur (22) ou du faisceau laser comprend la rotation dudit prisme ou dudit miroir.

11. Le procédé selon la revendication 7, dans lequel ladite surface durcie s'étend de manière circonférentielle autour de la surface interne du tube d'amortisseur.

12. Le procédé selon la revendication 7, dans lequel le guidage (204) du faisceau laser sur la surface interne (23) du tube d'amortisseur (22) comprend le guidage du faisceau laser de façon à former ladite surface durcie sous forme d'une pluralité de bandes (60) qui s'étendent chacune le long de ladite région de course de la surface interne (23) du tube d'amortisseur (22).

13. Le procédé selon la revendication 12, dans lequel ladite pluralité de bandes (60) est espacée l'une de l'autre à des intervalles angulaires réguliers autour de la surface interne (23) du tube d'amortisseur (22) et/ou
dans lequel ladite pluralité de bandes (60) s'étend chacune dans une direction axiale.

14. Le procédé selon l'une quelconque des revendications 7 à 13, dans lequel le tube d'amortisseur (22) est constitué d'un acier doux et/ou dans lequel ladite surface durcie présente une dureté Rockwell d'au moins environ RC 49.

15. Le procédé selon l'une quelconque des revendications 7 à 14, dans lequel le refroidissement de l'austénite afin de former ladite surface durcie comprend une autotrempe.
